# EUROPÄISCHE PATENTSCHRIFT

(11) **EP 1 656 507 B1**
(45) Veröffentlichungstag und Bekanntmachung des Hinweises auf die Patenterteilung: **27.04.2011**
(21) Anmeldenummer: 04762672.6
(22) Anmeldetag: 17.08.2004
(51) Int. Cl.: F16C 19/49, F16C 33/41, F16C 23/08

(54) **PENDELWÄLZLAGER**
SELF-ALIGNING ANTIFRICTION BEARING
ROULEMENT A ROTULE

(30) Priorität: 20.08.2003 DE 10338207
(43) Veröffentlichungstag der Anmeldung: 17.05.2006
(73) Patentinhaber: Schaeffler Technologies GmbH & Co. KG, 91074 Herzogenaurach (DE)
(72) Erfinder: SCHRÖDER, Rainer, 97440 Egenhausen (DE); GREHN, Martin, 97456 Dittelbrunn (DE)
(86) Internationale Anmeldenummer: PCT/DE2004/001828
(87) Internationale Veröffentlichungsnummer: WO 2005/019666

(56) Entgegenhaltungen:
- DE-U- 8 803 970
- FR-A- 1 083 678

## Beschreibung

### Gebiet der Erfindung

Pendelwälzlager mit wenigsten einer ersten Reihe Wälzkörper und mit einer zu der ersten Reihe Wälzköper benachbarten zweiten Reihe Wälzkörper.

### Hintergrund der Erfindung

Die mit dem Begriff Pendelwälzlager bezeichneten Pendelrollenlager und Tonnenrollenlager werden in Anwendungen eingesetzt, bei denen ein Winkelfehler zwischen Gehäuse und Welle auszugleichen ist. Durch die Verwendung des Wälzkörpers Rolle mit Linienberührung zwischen Außen- und Innenring sind diese Lager für hohe Belastungen geeignet. Bei geringer Belastung auf das Wälzlager neigen die Rollen aufgrund des fehlenden Wälzkontaktes zum Gleiten zwischen den Laufbahnen. Die Drehzahl des Käfigs mit den Wälzkörpern verringert sich zum Normalzustand unter Wälzkontakt. Bei schlagartigem Ansteigen der Belastung des Wälzlagers muss der Wälzkörper, der dann in den Eingriff zwischen Außen- und Innenring kommt, den gesamten Käfig mit allen anderen Wälzkörpern innerhalb von Bruchteilen einer Sekunde auf die richtige Drehzahl beschleunigen. Dieser Beschleunigungsvorgang erzeugt große Kräfte im Käfig. Der daraus resultierende Schlupf zwischen den beschleunigten Rollen und den Laufbahnen des Außen- bzw. des Innenringes führt zu Beschädigungen der Wälzkörper und der Laufbahnen.

Das vorgenannte Problem tritt z. B. bei Anwendungen auf, bei denen im Normalbetrieb die Wälzkörper nur gering belastet sind. Bei schlagartigen Erhöhungen der Belastung sind die Pendelwälzlager kurzzeitig Spitzenbelastungen ausgesetzt, die zu dem oben beschriebene Effekt führen können.

In der DE 8803970 U1 ist ein Radial-Wälzlager beschrieben, in dem Rollen und Kugeln als Wälzkörper gemeinsam eingesetzt werden. Das gattungsgemäße Pendelwälzlager ist mit wenigsten einer ersten Reihe Wälzkörper und einer zu der ersten Reihe Wälzköper benachbarten zweiten Reihe Wälzkörper versehen. Jede der Reihen weist umfangsseitig um eine Lagermittelachse des Pendelwälzlagers angeordnete Reihe mit Tonnenrollen auf. Außerdem ist in dem Pendelwälzlager eine Reihe Kugeln angeordnet. Durch die zusätzliche Reihe Kugeln soll in dem Lager nach DE 8803970 U1 die Tragzahl erhöht werden. Die Folgen aus kurzfristigen Lasterhöhungen sind mit dieser Ausführung nicht gelöst.

Die Kugeln in derartigen Lagern des Standes der Technik sind aufgrund ihrer punktförmigen Kontaktfläche zu den Laufbahnen während des Betriebes des Pendelwälzlagers bestrebt, eine kinematisch optimale Position einzunehmen. Das führt in der Regel zu axialen Zwangsbewegungen an den Kugeln. Die Kugeln stützen sich dadurch insbesondere seitlich in den Käfigtaschen gegen die Kräfte aus den Zwangsbewegungen ab. Erhöhte Reibung, verbunden mit höheren Betriebstemperaturen und Verschleiß in den Kugeltaschen sind die Folge. Die Halterungen der Kugeln in den Taschen sind gefährdet und verschleißen unter Umständen vorzeitig. Ein in DE 8803970 U1 beschriebener Käfig ist aufgrund der axial zwischen den Taschen für die Rollen gelegenen Kugeltaschen nur relativ aufwändig herzustellen.

### Zusammenfassung der Erfindung

Die Aufgabe der Erfindung ist es daher, ein Pendelwälzlager zu schaffen, mit dem die vorstehend beschriebenen Nachteile vermieden werden.

Die Aufgabe der Erfindung ist nach dem Gegenstand des Anspruches 1 und weiteren Ausgestaltungen der Erfindungen gemäß der abhängigen Ansprüche gelöst. Das Pendelwälzlager ist mit wenigsten einer ersten Reihe Wälzkörper und mit einer zu der ersten Reihe Wälzköper benachbarten zweiten Reihe Wälzkörper versehen. Jede der Reihen weist umfangsseitig um die Lagermittelachse des Pendelwälzlagers angeordnete Kugeln und Tonnenrollen oder anders sphärisch gestaltete Rollen auf. Dabei ist es denkbar, dass sich in Umfangsrichtung jeder der Rollen eine der Kugeln anschließt. Alternativ sind die Kugeln in Umfangsrichtung durch zwei oder mehr der Rollen voneinander getrennt.

Die Kugeln sind dabei mit einem allen Kugeln in dem Lager gemeinsamen gleichen Nenndurchmesser versehen. Der innerhalb der zulässigen Toleranz des Durchmessers der Kugeln kleinste Außendurchmesser der Kugeln ist größer als ein größter Außendurchmesser der Tonnenrollen. Dabei weisen die Rollen einen allen Rollen in dem Lager gemeinsamen Nenndurchmesser auf. Der größte Außendurchmesser der Rollen ist der innerhalb der Toleranz vom Nenndurchmesser der Rollen abweichende größte Durchmesser.

Jede gedachte, zu der Lagermittelachse konzentrische sowie kreisringförmig um die Mittelachse gelegte und mittig durch die Kugeln verlaufende erste Wälzkontaktebene der Kugeln pro Reihe und jede gedachte, zu der Mittelachse konzentrische, sowie die Rollen an dem größten Außendurchmesser schneidende zweite Wälzkontaktebenen der Rollen pro Reihe sind in jeder der Reihen längs der Lagermittelachse zueinander axial beabstandet. Vorzugsweise liegen sich die ersten Wälzkontaktebenen der Kugeln von Reihe zu Reihe einander axial näher, als die zweiten Wälzkontaktebenen der Rollen von Reihe zu Reihe. Dadurch sind die ersten Wälzkontaktebenen der Kugeln längs der Mittelachse und somit axial zwischen den zweiten Wälzkontaktebenen der Tonnenrollen angeordnet. Je näher die Wälzkontaktebenen der zueinander benachbarten Kugelreihen in Richtung der Quermittelebene des Lagers aufeinander zu gerückt sind, um so geringer sind die Zwangskräfte auf die Kugeln. Dadurch, dass die Kugeln und die Rollen umfangsseitig zusammen jeweils in einer Reihe liegen, ist der Käfig einfacher herzustellen und das Lager ist insgesamt schmaler und somit leichter sowie kostengünstiger herzustellen.

Die Kugeln tragen die Radiallast bei einer geringen Belastung des Lagers alleine. Bei höheren oder Spitzenbelastungen tragen die Rollen mit. Durch die Punktberührung zwischen Laufbahn und Kugel treten höhere Hertz'sche Pressungen auf, als bei einer Linienberührung zwischen Rolle und Laufbahn. Die vergleichsweise höhere Pressung im Wälzkontakt mit den Kugeln bei geringer Last führt zu geringerem Schlupf zwischen den Wälzkörpern. Mischreibung oder Festkörperreibung im Kontakt zwischen den Laufbahnen und den Wälzkörpern sind vermieden. Vergrößert wird dieser Effekt noch dadurch, dass nur die Kugeln und somit nicht die gesamte Anzahl der Wälzkörper im Eingriff sind. Die Last verteilt sich damit auf weniger Wälzkörper, wodurch die Pressungen im Wälzkontakt erhöht sind, Der Rollenkranz, bestehend aus Rollen und Käfig wird durch die Kugeln bei geringer Last mitgeschleppt.

Im Moment der Lastspitze werden die minimal größeren und in der Lastzone befindlichen Kugeln entsprechend ihrer Federkennlinie elastisch soweit verformt , dass die Rollen mittragen. Damit wird verhindert, dass Pressungen im Lager entstehen, die zu einer plastischen Verformung der Kugeln und der Laufbahnen im Wälzkontakt mit den Kugeln führen würden. Die schlagartigen Beschleunigungskräfte auf den Rollenkranz sind vermieden, da der Rollenkranz schon durch die Rollen in die Betriebsdrehzahl versetzt ist. Der Nenndurchmesser der Kugeln ist vorzugsweise in einem Bereich von 0, 005 % bis 0,4 % vom größten Nenndurchmesser der Rollen größer als der Durchmesser der Rollen.

Vorzugsweise ist das Pendelwälzlager mit einem Käfig für mindestens eine der Reihen versehen. Bevorzugt ist jedoch ein Käfig eingesetzt, der gleichzeitig beide Reihen führt. Der Käfig weist Kugeltaschen mit jeweils einer seitlichen Öffnung auf. Der Fachwelt ist dieser Käfig auch als Kamm- oder Doppelkammkäfig bekannt. Jede der Öffnungen der Taschen einer Reihe ist an einer von der anderen der Reihen abgewandten Seite des Käfigs ausgebildet. Das in Umfangsrichtung des Lagers tangentiale freie Öffnungsmaß der Öffnung ist kleiner als der Außendurchmesser der Kugel, so dass die Kugel auch seitlich an der Öffnung in der Tasche zurückgehalten ist. Die Öffnung ist auch beim Einschnappen der Kugeln von außen in den Käfig dienlich, da die umfangsseitig der Tasche nicht geschlossene Tasche weiter elastisch auffedert und die Einschnappkräfte dadurch geringer sind. Der Schnappbord ist damit gegen Beschädigung bei der Montage der Kugeln in den Käfig geschützt.

Jede der Kugeltaschen weist bevorzugt jeweils einen Bord an einem radial nach außen gewandten Rand auf. Der größte freie Abstand zumindest zwischen in Umfangsrichtung einander tangential gegenüberliegenden und dabei am weitesten voneinander entfernten Abschnitten des Bordes ist kleiner ist als die Summe aus dem Außendurchmesser der Kugel in der Tasche zuzüglich eines größtmöglichen Bewegungsspieles in der Tasche. Das Bewegungsspiel ist ein freier Abstand zwischen der Tasche und der jeweiligen Kugel in der Tasche radial unterhalb des Bordes. Der Bord umgreift somit die Kugel oberhalb des Teilkreisdurchmessers der Kugelreihe. In den größten freie Abstand zwischen den Abschnitten des Bordes ist auch ein größtmögliches freies Bewegungsspiel zwischen der Kugel in der Tasche und dem Bord einbezogen, so dass die Kugel in der Tasche zum Bord um das Bewegungsspiel frei beweglich aber von dem Bord radial nach außen gehalten ist.

Vorzugsweise ist der gesamte radial nach außen gerichteten Rand jeder der Kugeltaschen durch den Bord begrenzt. Der Bord erstreckt sich somit von einem Ende der Tasche an der Öffnung um die Kugel herum bis an das an der gegenüberliegende Ende der Tasche an der Öffnung.

Der Bord weist gemäß einer weiteren Ausgestaltung der Erfindung einen der Kugel in der Tasche zugewandten und die Kugel teilweise bis zur Öffnung umfangsseitig umfassenden innere Flächenabschnitt eines Kreiszylinders auf. Der Flächenabschnitt ist durch Radius beschrieben. Die quer zum Radius gerichtete Höhe des Flächenabschnittes nimmt von der von der Öffnung am weitesten Seite der Tasche in Richtung der Öffnung zu.

### Kurze Beschreibung der Zeichnungen

Nachfolgend werden anhand der Figuren 1 bis 10 weitere Ausgestaltungen der Erfindung und Ausführungsbeispiele zur Erfindung näher erläutert. Es zeigen im einzelnen:
- Figur 1: ein Ausführungsbeispiel eines Pendelwälzlagers in einer teilweise geschnittenen Gesamtansicht,
- Figur 2a, 2b: Teilschnitte durch das Pendelwälzlager nach Figur 1,
- Figur 3: ein weiteres Ausführungsbeispiel eines Pendelwälzlagers in einem Teilschnitt,
- Figur 4: eine Teilansicht des Käfigs des Pendelwälzlagers nach Figur 3
- Figur 5: ein weiteres Ausführungsbeispiel eines Pendelwälzlagers in einem Längsschnitt
- Figur 6 bis 8: Einzelheiten der Ausführung einer Kugeltasche eines Aus- führungsbeispieles der Erfindung und die
- Figuren 9 und 10: eine schematische Darstellung der Größenverhältnisse zwischen Tonnenrollen und Kugeln im Vergleich.

### Detaillierte Beschreibung der Zeichnungen

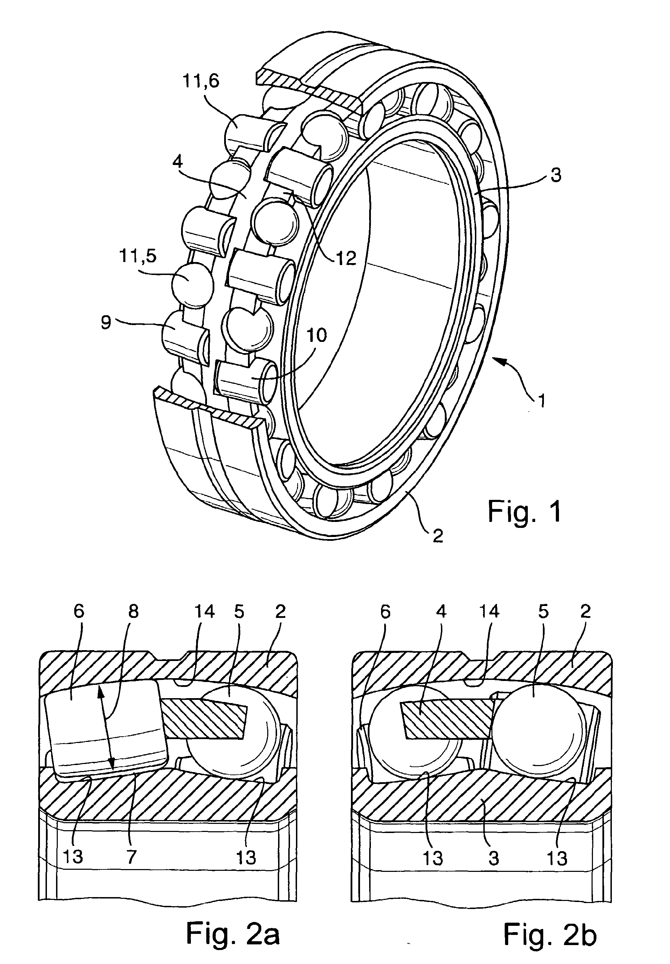

In Figur 1 ist eine bevorzugte Ausführungsform eines Pendelwälzlagers 1 gezeigt. Das Pendelwälzlager 1 ist mit einem Außenring 2, einem Innenring 3 und mit zwischen dem Außen- und Innenring angeordneten Wälzkörpern 11 versehen. Die Wälzkörper 11 sind als Kugeln 5 und als Rollen 6 ausgebildet und sind von einem gemeinsamen Käfig 4 geführt. In weiteren Anwendungen ist jedoch auch ein geteilter Käfig vorstellbar, der jede Reihe 9 und 10 der Wälzkörper 11 einzeln führt.

Die Kugeln 5 sind im Durchmesser minimal größer als die Rollen 6. Die Rollen 6 und Kugeln 5 sind jeweils in einer der Reihen 9 und 10 in Umfangsrichtung abwechselnd angeordnet, so dass zu jeder der Kugeln 5 in einer der Reihen 9 und 10 in Umfangsrichtung des Pendelwälzlagers 1 eine der Rollen 6 benachbart ist. Außerdem ist zu jeder der Kugeln 5 der ersten Reihe 9 eine Lücke 12 zwischen einer Kugel 5 und einer Rolle 6 der zweiten Reihe 10 benachbart. Bei der Dimensionierung des Durchmessers der Kugeln 5 sowie des Durchmessers 8 der Rollen 6 ist darauf zu achten, dass bei einer geringen Wälzlagerbelastung die Rollen zwischen zwei benachbarten Kugeln im Wälzkontakt nicht beide Laufbahnen 13 und 14 gleichzeitig berühren. Bei einer ersten geringen Lagerbelastung tragen nur die Kugeln 5 die Last, während die Rollen 6 sich unbelastet abwälzen.

Bei der Auslegung des Durchmesserunterschiedes 7 (Figur 2a) von der Kugel 5 zur Rolle 6 ist darauf zu achten, dass bei einer möglichen zweiten und dabei bis zur maximalen Lagerlast anwachsenden Lagerlast des Pendelwälzlagers 1 die Kugeln 5 sich nicht plastisch deformieren. Ein mögliches praktisches Maß für den Durchmesserunterschied 7 zwischen der größeren Kugel 5 und der kleineren Rolle 6 ist z. B. ein Maß von zwei Hundertsteln eines Millimeters.

Eine weitere nicht dargestellte Ausführungsform sieht vor, dass zwischen zwei Kugeln mehrere Rollen angeordnet sind. Hierbei ist zu beachten, dass mit abnehmender Anzahl der tragender Kugeln 5 in der Lastzone des Lagers bei der ersten Lagerbelastung, das Pendelwälzlager 1 und eine mittels des Pendelwälzlagers 1 gelagerte Welle zunehmend radial unruhiger läuft.

In den Figuren 2a und 2b ist das Pendelwälzlager 1 in Teilschnitten gezeigt. In der Figur 2a ist die tragende Kugel 5 bei einer ersten Lagerbelastung von so geringer Größe dargestellt, dass nur die Kugeln 5 tragen. In der Figur 2b ist der Kontakt einer nicht tragenden Rolle 6 bei der ersten Lagerbelastung dargestellt. Der Durchmesserunterschied 7 ist in dieser Darstellung übertrieben groß und somit nicht maßstäblich dargestellt.

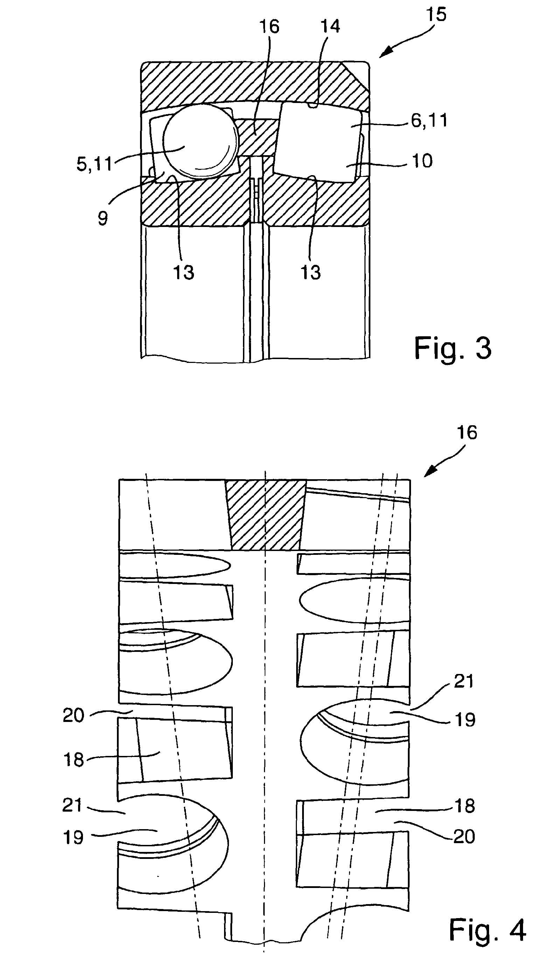

Figur 3 zeigt ein weiteres Ausführungsbeispiel eines Pendelwälzlagers 15 mit einem einteiligen Käfig 16, der gleichzeitig eine erste Reihe 9 und eine zweite Reihe 10 Wälzkörper 11 führt. Jede der Wälzkörperreihen 9 und 10 läuft an einer gemeinsamen äußeren Laufbahn 14 ab. Jeder der Reihen 9 und 10 ist jeweils am inneren Lagerring eine separate innere Laufbahn 13 zugeordnet. Wie insbesondere aus einer Darstellung des Käfigs 16, als vom Pendelwälzlager 15 losgelöstes Einzelteil, und der Anordnung der Taschen 18 und 19 nach Figur 4 ersichtlich ist, ist zu jeder der Kugeln 5 der ersten Reihe 9 eine Rolle 6 der zweiten Reihe 10 benachbart. Die Rollentaschen 18 und die Kugeltaschen 19 einer jeden der Reihen 9 und 10 weisen an den seitlichen Stirnseiten des Käfigs 16 Öffnungen 20 bzw. 21 auf, wobei die Öffnungen 20 und 21 einer der Reihen 9 oder 10 gemeinsam an einer von der anderen der Reihen 9 oder 10 abgewandten Seite der Taschen 18 und 19 ausgebildet sind.

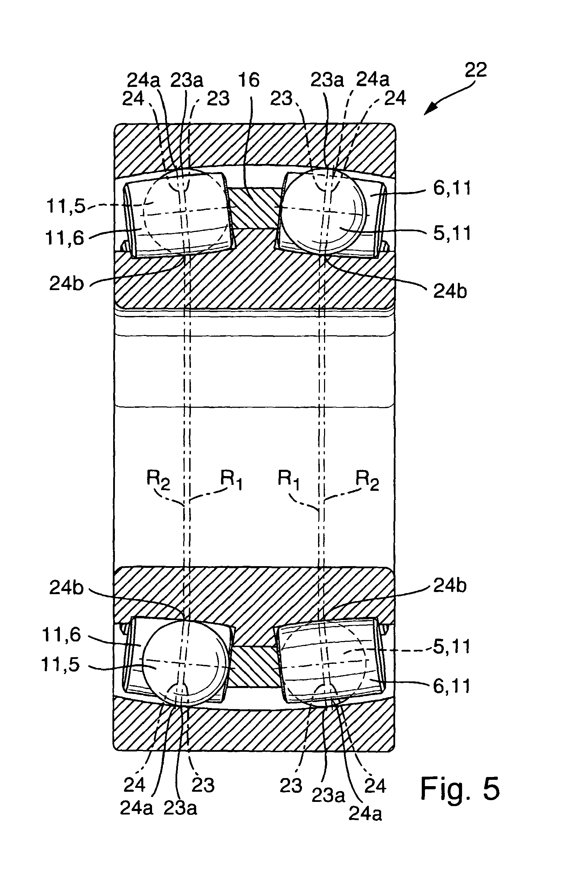

Figur 5 zeigt ein Pendelwälzlager 22 mit dem Käfig 16, mit den Kugeln 5 und mit den Rollen 6. Die gedachten Wälzkontaktebenen 23 der Kugeln 5 sowohl der ersten Reihe 9 als auch der zweiten Reihe 10 sind axial zwischen den Wälzkontaktebenen 24 der Rollen 6 der ersten Reihe 9 und der zweiten Reihe 10 angeordnet. Folglich sind die Wälzkreisebenen 23 in einer der Reihen 9 oder 10 zu den Wälzkreiskreisebenen 24 in der selben Reihe 9 oder 10 axial beabstandet. Die Wälzkontaktebenen 23 sind kreisringförmig ausgebildet und dabei radial nach außen durch den äußeren um die Kugeln 5 gelegten Wälzkreis 23a und radial nach innen durch den von den Kugeln 5 umfassten Hüllkreis 23b begrenzt. Die Wälzkontaktebenen 23 sind zu einer durch den Hüllkreis 23b gelegten Radialebene R₁ geneigt. Die Wälzkontaktebenen 24 der Rollen 6 sind kreisringförmig ausgebildet und dabei radial nach außen durch den äußeren um die Rollen 6 gelegten Wälzkreis 24a und radial nach innen durch den von den Rollen 6 umfassten Hüllkreis 24b begrenzt. Die Wälzkontaktebenen 24 sind zu einer durch den Hüllkreis 24b gelegten Radialebene R₂ geneigt.

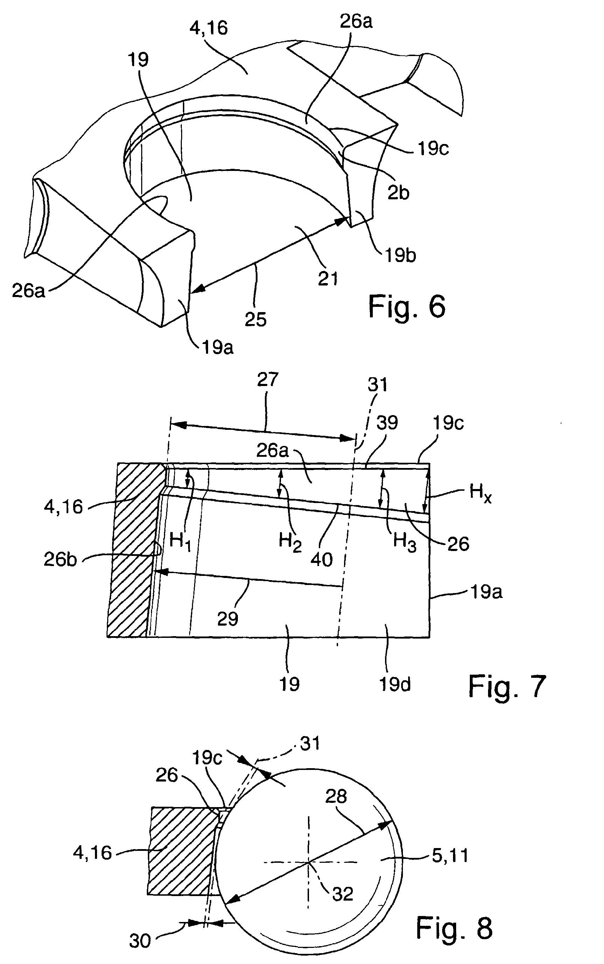

Die Figuren 6 bis 8 zeigen Details der Kugeltasche 19, wie diese vorzugsweise an den Käfigen 4 und 16 ausgebildet ist. Das tangentiale freie Öffnungsmaß 25 zwischen den einander in Umfangsrichtung um die Mittelachse des Lagers tangential gegenüberliegenden Enden 19a und 19b der Tasche 19 ist kleiner als der innerhalb der Durchmessertoleranz der Kugeln 5 kleinste Außendurchmesser 28 der Kugel 5. Der radial nach außen gewandte Rand 19c der Tasche 19 geht in einen Bord 26 über. Zumindest der tangential in Umfangsrichtung des Käfigs 4, 16 größte und durch das Zweifache des Radius 27 beschriebene freie Abstand der einander gegenüberliegenden Flächenabschnitte 26a ist kleiner als die Summe aus dem zweifachen des Radius 29. Der Radius 29 entspricht der Summe aus dem Außendurchmesser 28 und dem Bewegungsspiel 30. Der Radius 27 schließt dabei das Bewegungsspiel 31 zwischen der Kugel 5 und dem Bord 26 mit ein.

Der der Kugel 5 zugewandte Flächenabschnitt 26a des Bordes 26 ist ein Flächenabschnitt eines Kreiszylinders, der durch den Radius 27 beschrieben ist. Der Radius 27 geht dabei von einer Achse 31 aus, die in der Wälzkontaktebene 23 liegt und die durch den Mittelpunkt 32 der Kugel 5 gelegt ist. Die zum Radius 27 quer gerichtete Höhe H₁, H₂, H₃ zwischen den Körperkanten 39 und 40 nimmt, ausgehend von einer zur Öffnung 21 am weitesten beabstandeten Seite 26b des Bordes 26 in Richtung der Enden 19a,b, bis auf die maximale Höhe Hₓ zu. Dem Bord 26 schließt sich radial nach innen ein Flächenabschnitt 19d einer Innenfläche der Tasche mit dem Radius 29 an.

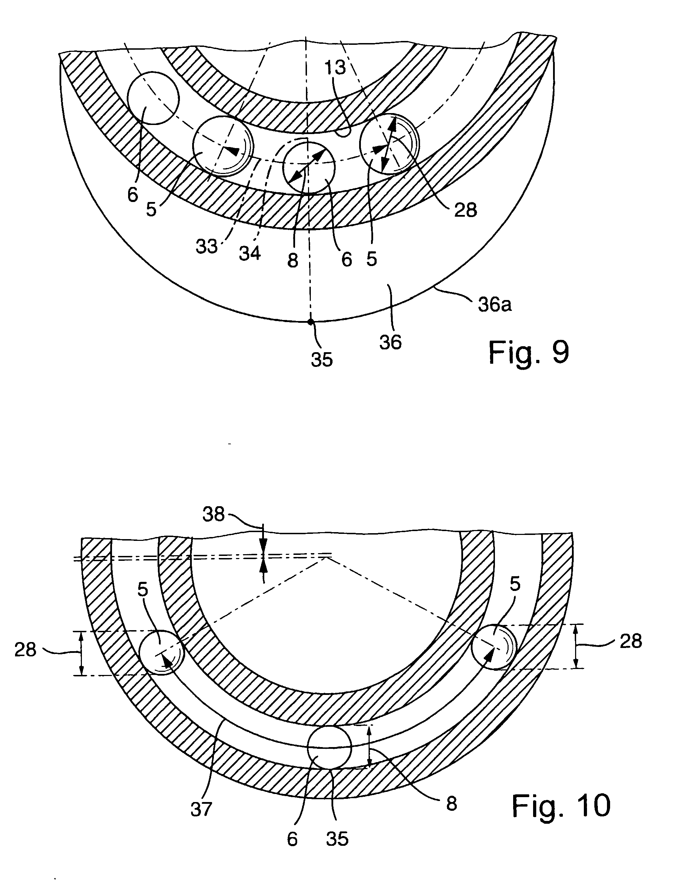

Figur 9 zeigt einen schematisch sowie übertrieben und nicht maßstäblich dargestellten Idealzustand der Anordnung und Größenverhältnisse von Rollen 6 und Kugeln 5 in einem Pendelwälzlager. Der innerhalb der Toleranzen vom Nennmaß einer Kugelabmessung kleinstmögliche Außendurchmesser 28 der Kugeln 5 ist größer als der innerhalb der Toleranzen einer Rollenabmessung größtmögliche Außendurchmesser 8 der Rolle 6. Die Rollen 6 und Kugeln 5 sind mit gleichmäßiger Teilung T zueinander am Umfang des Pendelwälzlagers angeordnet. Jeweils eine Kugel 5 ist umfangsseitig zu einer Rolle 6 benachbart. Der Abstand 33 im Bogenmaß zwischen zwei umfangsseitig aufeinander folgenden und dabei durch eine der Rollen 6 voneinander getrennten Kugeln ist so klein, dass der radiale Abstand 34 zwischen der Rolle 6 und der Laufbahn 13 verbleibt. Der radiale Abstand 34 ist zwischen der dabei im Scheitelpunkt 35 einer Lastzone 36 liegenden Rolle 6 und der inneren Laufbahn 13 ausgebildet. Die Lastzone 36 ist in Figur 9 schematisch durch die Linie 36a beschrieben, die ohne Zahlenangabe in dem Scheitelpunkt 35 den höchsten Wert der Hertz'schen Pressung indiziert.

In Figur 10 ist der Abstand 37, abweichend zur Erfindung, im Bogenmaß zwischen den Kugeln 5 zu groß, so dass aufgrund des axialen Durchhanges 38 der Laufbahn 13 und ggf. aufgrund zu hoher elastischer Verformung der Kugeln 5 unter einer ersten Lagerlast der radiale Abstand zwischen den Laufbahnen 13 und 14 dem Durchmesser 8 der Rolle 6 entspricht oder kleiner ist als dieser.

### Bezugszeichen

- 1: Pendelwälzlager
- 2: Außenring
- 3: Innenring
- 4: Käfig
- 5: Kugel
- 6: Rolle
- 7: Durchmesserunterschied
- 8: Durchmesser
- 9: erste Reihe
- 10: zweite Reihe
- 11: Wälzkörper
- 12: Lücke
- 13: innere Laufbahn
- 14: äußere Laufbahn
- 15: Pendelwälzlager
- 16: Käfig
- 17: äußere Laufbahn
- 18: Rollentasche
- 19: Kugeltasche
- 19a: Ende
- 19b: Ende
- 19c: Rand
- 19d: Flächenabschnitt
- 20: Öffnung
- 21: Öffnung
- 22: Pendelwälzlager
- 23: Wälzkontaktebene
- 23a: Wälzkreis
- 23b: Hüllkreis
- 24: Wälzkontaktebene
- 24a: Wälzkreis
- 24b: Hüllkreis
- 25: Öffnungsmaß
- 26: Bord
- 26a: Flächenabschnitt
- 26b: Seite
- 27: Radius
- 28: Außendurchmesser
- 29: Radius
- 30: Bewegungsspiel
- 31: Achse
- 32: Mittelpunkt
- 33: Abstand
- 34: Abstand
- 35: Scheitelpunkt
- 36: Lastzone
- 36a: Linie
- 37: Abstand
- 38: Durchhang
- 39: Körperkante
- 40: Körperkante

## Patentansprüche

1. Pendelwälzlager (1, 15, 22) mit wenigsten einer ersten Reihe (9) Wälzkörper (11) und mit einer zu der ersten Reihe (9) Wälzköper (11) benachbarten zweiten Reihe (10) Wälzkörper (11), **dadurch gekennzeichnet, dass** jede der Reihen (9, 10) umfangsseitig um eine Mittelachse des Pendelwälzlagers (1, 15, 22) angeordnete Kugeln (5) und Rollen (6) aufweist und dabei die Kugeln (5) einen kleinsten Außendurchmesser (28) aufweisen, der größer ist als ein größter Außendurchmesser (8) der Rollen (6), das Pendelwälzlager (1, 15, 22) weiter mit je einer gedachten, zu der Mittelachse konzentrischen und mittig durch die Kugeln (5) verlaufenden ersten Wälzkontaktebene (23) der Kugeln (5) pro Reihe (9, 10) und mit je einer gedachten, zu der Mittelachse konzentrischen, sowie die Rollen (6) an dem größten Außendurchmesser (8) schneidenden zweiten Wälzkontaktebene (24) der Rollen (6) pro Reihe (9, 10), wobei in jeder der Reihen (9, 10) die erste Wälzkontaktebene (23) längs der Lagermittelachse zu der zweiten Wälzkontaktebene (24) beabstandet ist, ausgebildet ist.

2. Pendelwälziager (1, 15, 22) nach Anspruch 1, bei dem sich die ersten Wälzkontaktebenen (23) von Reihe (9, 10) zu Reihe (9, 10) einander axial näher liegen als die zweiten Wälzkontaktebenen (24) von Reihe (9, 10) zu Reihe (9, 10), wodurch die ersten Wälzkontaktebenen (23) axial zwischen den zweiten Wälzkontaktebenen (24) angeordnet sind.

3. Pendelwälzlager (1, 15, 22) nach Anspruch 1, mit einer ersten Lagerbelastung, bei der ein in die Kugeln (5) am Außendurchmesser (28) der Kugeln (5) umgreifender erster Wälzkreis (23a) pro Reihe größer ist als ein die Rollen (6) am größten Außendurchmesser (8) der Rollen (6) umgreifender zweiter Wälzkreis (24a) pro Reihe (9, 10) und mit einer zweiten Lagerbelastung, bei der der erste Wälzkrels (23a) und der zweite Wälzkreis (24a) gleich groß sind und dabei zumindest die Kugeln (5) elastisch wenigstens radial eingefadert sind, wobei die zweite Lagerlast größer als die erste Lagerlast ist.

4. Pendelwälzlager (1, 15, 22) nach Anspruch 1 oder 3, bei dem pro Reihe (9, 10) in Umfangsrichtung um die Mittelachse jeweils eine der Kugeln (5) zu einer der Rollen (6) benachbart ist.

5. Pendelwälzlager (1, 15, 22) nach Anspruch 3, bei dem die Kugeln (5) einen kleinstmöglichen Außendurchmesser der Kugeln (28) und die Rollen (6) einen größtmöglichen Außendurchmesser (8) der Rollen (6) in jeder der Reihen (9, 10) aufweisen und bei dem in jeder der Reihen (9, 10) jeweils ein größter Abstand (33) im Bogenmaß zwischen zwei umfangsseitig aufeinanderfolgenden und dabei umfangsseitig durch mindestens eine der Rollen (6) voneinander getrennten der Kugeln (5) mindestens so klein ist, dass in einem Scheitelpunkt (35) einer Lastzone (36) aus einer höchsten der ersten Lagerbelastung zwischen einer inneren Laufbahn (13) des Pendelwälzlagers (1, 15, 22) und einer äußeren Laufbahn (14) des Pendelwälzlagers (1,15, 22) ein radialer Abstand (34) verbleibt, der größer ist als der größte Außendurchmesser (8) der Rollen (6), wobei die Wälzkörper (11) radial zwischen den Laufbahnen (13, 14) angeordnet sind.

6. Pendelwälzlager (1, 15, 22) nach Anspruch 1, 3 oder 5, mit einem Käfig (4, 16) wobei die erste Reihe (9) und die zweite Reihe (10) In dem Käfig (4,16) gemeinsam geführt sind.

7. Pendelwälzlager (15, 22) nach Anspruch 1, 3 oder 5, mit einem Käfig (16) wobei die erste Reihe (9) und die zweite Reihe (10) in dem Käfig (16) gemeinsam geführt sind und wobei Jeweils zu einer Kugel (5) der ersten Reihe (9) eine Rolle (6) der zweiten Reihe (10) benachbart ist.

8. Pendelwälzlager (1) nach Anspruch 1, 3 oder 5, mit einem Käfig (4), wobei die erste Reihe (9) und die zweite Reihe (10) in dem Käfig (4) gemeinsam geführt sind und wobei Jeweils zu einer Kugel (5) der ersten Reihe (9) eine umfangsseitige Lücke (12) in der zweiten Reihe (10) zwischen einer Rolle (6) und einer Kugel (5) benachbart ist.

9. Pendelwälzlagers (1) nach Anspruch 1, mit einem Käfig (4, 16) für mindestens eine der Reihen (9, 10) des Pendelwälzlagers (1, 15, 22), wobei der Käfig Kugeltaschen (19) mit jeweils einer seitlichen Öffnung (21) aufweist, wobei jede der Öffnungen (21) an einer von der anderen der Reihen (9, 10) abgewandten Seite des Käfigs (4, 16) ausgebildet ist und wobei ein in tangentiale Richtung freies Öffnungsmaß (25) der Öffnung (21) kleiner ist als der Außendurchmesser (28) der Kugel (5).

10. Pendelwälzlager (1) nach Anspruch 9, wobei der Käfig jeweils einen Bord (26) an einem radial nach außen gewandten Rand (19c) jeder der Kugeltaschen (19) aufweist, wobei der größte freie Abstand zumindest zwischen in Umfangsrichtung einander tangential gegenüberliegenden und dabei am weitesten voneinander entfernten Abschnitten des Bordes (26) kleiner ist als der Außendurchmesser (28) der Kugel (5) in der Tasche (19) zuzüglich eines größtmöglichen In Richtung der Tasche (19) freien Bewegungsspieles (30) zwischen der Tasche (19) und der jeweiligen Kugel (5) radial unterhalb des Bordes (26) und wobei der größte freie Abstand ein größtmögliches freies Bewegungsspiel (31) zwischen der Kugel (5) und dem Bord (26) einschließt.

11. Pendelwälzlager (1) nach Anspruch 10, wobei der Rand (19c) jeder der Kugeltaschen (19) durch den den sich bis an die Öffnung (21) erstreckenden Bord (26) gebildet ist.

12. Pendelwälzlager (1) nach Anspruch 11 , wobei der Bord (26) einen der Kugel (5) in der Tasche (19) zugewandten und die Kugel (5) teilweise bis zur Öffnung (21) umfangsseitig umfassenden innere Flächenabschnitt (26a) eines Kreiszylinders aufweist, wobei der Flächenabschnitt (26) durch einen Radius (27) beschrieben ist.

13. Pendelwälzlager (1) nach Anspruch 12, wobei der Flächenabschnitt (26a) von zwei Körperkanten begrenzt ist, wobei die Körperkanten (39, 40) der Kugel (5) in der Tasche (19) zugewandt sind und die Kugel (5) dabei teilweise bis zur Öffnung (21) umfassen und wobei die Körperkanten (39, 40) an der Öffnung (21), quer zu dem Radius (27) betrachtet, am weitesten voneinander entfernt sind und mit zunehmendem Abstand von der Öffnung (21) weg, sich, quer zu dem Radius (27) betrachtet, einander nähern.

## Claims

1. Self-aligning antifriction bearing (1, 15, 22) comprising at least a first row (9) of rolling elements (11) and comprising a second row (10) of rolling elements (11) adjacent to the first row (9) of rolling elements (11), **characterized in that** each of the rows (9, 10) has balls (5) and rollers (6) disposed peripherally about a center axis of the self-aligning antifriction bearing (1, 15, 22) and the balls (5) in this case have a smallest external diameter (28) which is greater than a largest external diameter (8) of the rollers (6); the self-aligning antifriction bearing (1, 15, 22) is further configured with, respectively, an imaginary first rolling contact plane (23) of the balls (5) per row (9, 10), which plane is concentric to the center axis and runs centrally through the balls (5), and with, respectively, an imaginary second rolling contact plane (24) of the rollers (6) per row (9, 10), which plane is concentric to the center axis and intersects the rollers (6) at the largest external diameter (8), in each of the rows (9, 10) the first rolling contact plane (23) being axially distanced from the second rolling contact plane (24) along the bearing center axis.

2. Self-aligning antifriction bearing (1, 15, 22) according to Claim 1, in which the first rolling contact planes (23) from row (9, 10) to row (9, 10) lie axially closer together than the second rolling contact planes (24) from row (9, 10) to row (9, 10), whereby the first rolling contact planes (23) are disposed axially between the second rolling contact planes (24).

3. Self-aligning antifriction bearing (1, 15, 22) according to Claim 1, comprising a first bearing load in which a first rolling circle (23a) per row, which encompasses the balls (5) at the external diameter (28) of the balls (5), is greater than a second rolling circle (24a) per row (9, 10), which encompasses the rollers (6) at the largest external diameter (8) of the rollers (6), and comprising a second bearing load in which the first rolling circle (23a) and the second rolling circle (24a) are equally large and at least the balls (5) are elastically inflexed at least radially, the second bearing load being greater than the first bearing load.

4. Self-aligning antifriction bearing (1, 15, 22) according to Claim 1 or 3, in which per row (9, 10), in the peripheral direction about the center axis, respectively one of the balls (5) is adjacent to one of the rollers (6).

5. Self-aligning antifriction bearing (1, 15, 22) according to Claim 3, in which the balls (5) have a smallest possible external diameter (28) of the balls and the rollers (6) have a largest possible external diameter (8) of the rollers (6) in each of the rows (9, 10), and in which, in each of the rows (9, 10), a largest distance (33) in the radian measure between two of the balls (5) which succeed each other peripherally and which are here mutually separated peripherally by at least one of the rollers (6) is respectively sufficiently small that, in a vertex (35) of a load zone (36) resulting from a highest one of the first bearing load, between an inner raceway (13) of the self-aligning antifriction bearing (1, 15, 22) and an outer raceway (14) of the self-aligning antifriction bearing (1, 15, 22) a radial distance (34) remains which is greater than the largest external diameter (8) of the rollers (6), the rolling elements (11) being disposed radially between the raceways (13, 14).

6. Self-aligning antifriction bearing (1, 15, 22) according to Claim 1, 3 or 5, comprising a cage (4, 16), the first row (9) and the second row (10) being jointly guided in the cage (4, 16).

7. Self-aligning antifriction bearing (15, 22) according to Claim 1, 3 or 5, comprising a cage (16), the first row (9) and the second row (10) being jointly guided in the cage (16) and a ball (5) of the first row (9) respectively being adjoined by a roller (6) of the second row (10).

8. Self-aligning antifriction bearing (1) according to Claim 1, 3 or 5, comprising a cage (4), the first row (9) and the second row (10) being jointly guided in the cage (4) and a ball (5) of the first row (9) respectively being adjoined by a peripheral gap (12) in the second row (10) between a roller (6) and a ball (5).

9. Self-aligning antifriction bearing (1) according to Claim 1, comprising a cage (4, 16) for at least one of the rows (9, 10) of the self-aligning antifriction bearing (1, 15, 22) the cage having ball pockets (19) with, respectively, a lateral opening (21), each of the openings (21) being configured on a side of the cage (4, 16) which is facing away from the other of the rows (9, 10), and a, in the tangential direction, free apertural measure (25) of the opening (21) being smaller than the external diameter (28) of the ball (5).

10. Self-aligning antifriction bearing (1) according to Claim 9, the cage having respectively a flange (26) on a radially outward facing rim (19c) of each of the ball pockets (19), the largest clear distance, at least between portions of the flange (26) which lie tangentially opposite one another in the peripheral direction and are in this case farthest removed from one another, being less than the external diameter (28) of the ball (5) in the pocket (19), plus a greatest possible motional play (30), free in the direction of the pocket (19), between the pocket (19) and the respective ball (5) radially beneath the flange (26), and the largest clear distance including a greatest possible free motional play (31) between the ball (5) and the flange (26).

11. Self-aligning antifriction bearing (1) according to Claim 10, the rim (19c) of each of the ball pockets (19) being formed by the flange (26) extending as far as the opening (21).

12. Self-aligning antifriction bearing (1) according to Claim 11, the flange (26) having an inner surface portion (26a) of a circular cylinder, the surface portion (26a) facing the ball (5) in the pocket (19) and, peripherally, partially encompassing the ball (5) as far as the opening (21) and being described by a radius (27).

13. Self-aligning antifriction bearing (1) according to Claim 12, the surface portion (26a) being bounded by two body edges, the body edges (39, 40) facing the ball (5) in the pocket (19) and partially encompassing the ball (5) as far as the opening (21), and the body edges (39, 40) at the opening (21), viewed transversely to the radius (27), being farthest distant from one another and, as the distance away from the opening (21) increases, viewed transversely to the radius (27), coming closer together.

## Revendications

1. Roulement à rotule (1, 15, 22) comprenant au moins une première rangée (9) de corps de roulement (11) et une deuxième rangée (10) de corps de roulement (11) adjacente à la première rangée (9) de corps de roulement (11), **caractérisé en ce que** chacune des rangées (9, 10) présente, du côté de la périphérie, des billes (5) et des rouleaux (6) disposés autour d'un axe médian du roulement à rotule (1, 15, 22), les billes (5) présentant ainsi un plus petit diamètre extérieur (28) qui est supérieur à un plus grand diamètre extérieur (8) des rouleaux (6), le roulement à rotule (1, 15, 22) étant réalisé en outre avec un premier plan de contact de roulement respectif (23) des billes (5) imaginaire, s'étendant concentriquement à l'axe médian et centralement à travers les billes (5), pour chaque rangée (9, 10), et avec un deuxième plan de contact de roulement respectif (24) des rouleaux (6) imaginaire, concentrique à l'axe médian, et coupant les rouleaux (6) au niveau du plus grand diamètre extérieur (8), pour chaque rangée (9, 10), le premier plan de contact de roulement (23) étant espacé le long de l'axe médian du roulement, par rapport au deuxième plan de contact de roulement (24), dans chacune des rangées (9, 10).

2. Roulement à rotule (1, 15, 22) selon la revendication 1, dans lequel les premiers plans de contact de roulement (23) sont disposés axialement plus près les uns de autres d'une rangée (9, 10) à l'autre (9, 10), que les deuxièmes plans de contact de roulement (24) d'une rangée (9, 10) à l'autre (9, 10), de sorte que les premiers plans de contact de roulement (23) sont disposés axialement entre les deuxièmes plans de contact de roulement (24).

3. Roulement à rotule (1, 15, 22) selon la revendication 1, comprenant une première contrainte de palier dans laquelle un premier cercle de roulement (23a) par rangée, venant en prise autour des billes (5) sur le diamètre extérieur (28) des billes (5) est supérieur à un deuxième cercle de roulement (24a) par rangée (9, 10) venant en prise autour des rouleaux (6) sur le plus grand diamètre extérieur (8) des rouleaux (6), et comprenant une deuxième contrainte de palier dans laquelle le premier cercle de roulement (23a) et le deuxième cercle de roulement (24a) sont identiques et ainsi au moins les billes (5) sont suspendues à ressort élastiquement au moins radialement, la deuxième charge de palier étant supérieure à la première charge de palier.

4. Roulement à rotule (1, 15, 22) selon la revendication 1 ou 3, dans lequel, pour chaque rangée (9, 10) dans la direction périphérique autour de l'axe médian, à chaque fois l'une des billes (5) est adjacente à l'un des rouleaux (6).

5. Roulement à rotule (1, 15, 22) selon la revendication 3, dans lequel les billes (5) présentent un diamètre extérieur le plus petit possible (28) des billes et les rouleaux (6) présentent un diamètre extérieur le plus grand possible (8) des rouleaux (6) dans chacune des rangées (9, 10), et dans lequel, dans chacune des rangées (9, 10), à chaque fois une plus grande distance (33) en dimension d'arc entre deux des billes (5) successives sur la périphérie et ainsi séparées l'une de l'autre sur la périphérie par au moins l'un des rouleaux (6) est au moins si petite que dans un sommet (35) d'une zone de charge (36) constituée d'une contrainte de palier la plus élevée de la première contrainte de palier entre une piste de roulement interne (13) du roulement à rotule (1, 15, 22) et une piste de roulement externe (14) du roulement à rotule (1, 15, 22), subsiste une distance radiale (34) qui est supérieure au plus grand diamètre extérieur (8) des rouleaux (6), les corps de roulement (11) étant disposés radialement entre les pistes de roulement (13, 14).

6. Roulement à rotule (1, 15, 22) selon les revendications 1, 3 ou 5, comprenant une cage (4, 16), la première rangée (9) et la deuxième rangée (10) étant guidées ensemble dans la cage (4, 16).

7. Roulement à rotule (15, 22) selon les revendications 1, 3 ou 5, comprenant une cage (16), la première rangée (9) et la deuxième rangée (10) étant guidées ensemble dans la cage (16) et à chaque fois un rouleau (6) de la deuxième rangée (10) étant adjacent à une bille (5) de la première rangée (9).

8. Roulement à rotule (1) selon les revendications 1, 3 ou 5, comprenant une cage (4), la première rangée (9) et la deuxième rangée (10) étant guidées ensemble dans la cage (4) et un vide périphérique (12) dans la deuxième rangée (10) entre un rouleau (6) et une bille (5) étant à chaque fois adjacent à une bille (5) de la première rangée (9).

9. Roulement à rotule (1) selon la revendication 1, comprenant une cage (4, 16) pour au moins l'une des rangées (9, 10) du roulement à rotule (1, 15, 22), la cage présentant des cavités de billes (19) avec à chaque fois une ouverture latérale (21), chacune des ouvertures (21) étant réalisée sur un côté de la cage (4, 16) opposé à l'autre des rangées (9, 10), et une dimension d'ouverture libre (25) de l'ouverture (21) dans la direction tangentielle étant inférieure au diamètre extérieur (28) de la bille (5).

10. Roulement à rotule (1) selon la revendication 9, dans lequel la cage présente à chaque fois une bordure (26) sur un bord (19c) tourné radialement vers l'extérieur de chacune des cavités de bille (19), la plus grande distance libre au moins entre des portions de la bordure (26) opposées tangentiellement l'une à l'autre dans la direction périphérique et donc les plus éloignées les unes des autres étant plus petite que le diamètre extérieur (28) de la bille (5) dans la cavité (19) en plus d'un jeu de déplacement libre (30) aussi grand que possible dans la direction de la cavité (19) entre la cavité (19) et la bille respective (5), radialement en dessous de la bordure (26), et la plus grande distance libre incluant un jeu de déplacement libre (31) le plus grand possible entre la bille (5) et la bordure (26).

11. Roulement à rotule (1) selon la revendication 10, dans lequel le bord (19c) de chacune des cavités de bille (19) est formé par la bordure (26) s'étendant jusqu'à l'ouverture (21).

12. Roulement à rotule (1) selon la revendication 11, dans lequel la bordure (26) présente une portion de surface interne (26a) d'un cylindre circulaire tournée vers la bille (5) dans la cavité (19) et entourant sur la périphérie la bille (5) en partie jusqu'à l'ouverture (21), la portion de surface (26a) étant décrite par un rayon (27).

13. Roulement à rotule (1) selon la revendication 12, dans lequel la portion de surface (26a) est limitée par deux arêtes de corps, les arêtes de corps (39, 40) étant tournées vers la bille (5) dans la cavité (19) et entourant ainsi partiellement la bille (5) jusqu'à l'ouverture (21), et les arêtes de corps (39, 40) au niveau de l'ouverture (21), considérées transversalement au rayon (27), étant le plus éloignées l'une de l'autre, et se rapprochant l'une de l'autre au fur et à mesure de l'éloignement de l'ouverture (21), considéré transversalement au rayon (27).
